# EUROPÄISCHE PATENTSCHRIFT

(11) **EP 1 508 480 B1**
(45) Veröffentlichungstag und Bekanntmachung des Hinweises auf die Patenterteilung: **05.10.2011**
(21) Anmeldenummer: 04017900.4
(22) Anmeldetag: 28.07.2004
(51) Int. Cl.: B60R 16/02

(54) **Anzeigeeinrichtung für Motorrad**
Display device for motorcycle
Dispositif d'affichage pour motocycle

(30) Priorität: 21.08.2003 DE 10338354
(43) Veröffentlichungstag der Anmeldung: 23.02.2005
(73) Patentinhaber: Bayerische Motoren Werke Aktiengesellschaft, 80788 München (DE)
(72) Erfinder: Dzurnak, Stanislav, 85764 Oberschleissheim (DE)

(56) Entgegenhaltungen:
- EP-A- 1 081 035
- DE-A1- 10 120 866
- DE-A1- 19 941 960
- US-B1- 6 225 584
- PATENT ABSTRACTS OF JAPAN Bd. 014, Nr. 174 (M-0959), 5. April 1990 (1990-04-05) & JP 02 028076 A (YAMAHA MOTOR CO LTD), 30. Januar 1990 (1990-01-30)

## Beschreibung

Die Erfindung bezieht sich auf eine Anzeigeeinrichtung, wie sie im Ober-begriff des Hauptanspruchs beschrieben ist.

Funktionen in Fahrzeugen werden heutzutage durch den Fahrer noch im überwiegenden Maße durch Bedienköpfe, Schalter und ähnlichem aufgerufen. Es ist zu beobachten, dass die Fahrzeuge mit steigender Anzahl von Funktionen ausgestattet werden, entsprechend erhöht sich die Anzahl der Bedieneinrichtungen. Angesichts der Vielzahl von Knöpfen und Schalter ist der Fahrer teilweise überfordert. Hinzu kommt bei Fahrzeugen, wie bspw. einem Motorrad der Umstand, dass die Bedienelemente in Griffnähe des Fahrers liegen müssen und für deren Unterbringung oft nur der Lenker in Frage kommt. Der Platz ist hier aber beschränkt.

Es ist daher vorgeschlagen worden - und wird auch schon in Personen-kraftwagen eingesetzt -, für die Bedienung des Fahrers einen Multifunktions-schalter vorzusehen, der nicht direkt die Schaltfunktion auslöst, sondern eine Bildschirmanzeige steuert. Der Bildschirm zeigt beim Betätigen des Multifunktionsschalters wechselnde Menüs mit auswählbaren Funktionen an. Der Fahrer kann die gewünschte Funktion durch den Multifunktionsschalter bestätigen.

Die gattungsbildende EP 1 081 035 A2 zeigt eine solche Lösung für ein Motorrad. Hier ist der Bildschirm im Blickfeld des Fahrers etwa in der Mitte einer Lenkstange angeordnet. Unmittelbar neben dem Bildschirm befindet sich der entsprechende Multifunktionsschalter. Um ihn bedienen zu können, muss der Fahrer jedes Mal seine Hand vom Lenkergriff nehmen.

Aus der PAJ 02028076 ist ein Multifunktionsschalter entnehmbar, der in unmittelbarer Nachbarschaft zum Lenkergriff an der Lenkstange befestigt ist. An diesem Multifunktionsschalter sind verschiedene Schalter zum Ansteuern der ihnen zugeordneten Fahrzeugfunktionen vorgesehen.

Aufgabe der Erfindung ist es, eine gattungsgemäße Anzeigeeinrichtung so zu gestalten, dass sie sich für Fahrzeuge mit Lenker, also insbesondere zwei- oder dreirädrige Fahrzeuge, wie Motorräder usw. eignet und ihre Bedienbarkeit erhöht wird.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Der Bildschirm ist demnach in der bekannten Weise vor dem Fahrer angeordnet, das heißt, er befindet sich in Blickrichtung zur der vor ihm liegenden Straße. Der Multifunktionsschalter ist in unmittelbarer Nähe eines Lenkergriffs, vorzugsweise des linken Lenkergriffs vorgesehen. Auf diese Weise kann der Fahrer, ohne die Hand vom Lenkergriff zu nehmen, mit seinem Daumen den Multifunktionsschalter bedienen. Nach einer gewissen Eingewöhnung wird er dies "blind" tun, er braucht hierfür dann seinen Blick nicht mehr vom Verkehrsgeschehen abwenden. Außerdem kann er den Lenker fest umklammert halten und hat so jederzeit die Kontrolle über das Fahrzeug. Dadurch, dass der Bildschirm vor ihm liegt, kann er die wechselnde Bildschirmanzeige durch kurze Blicke kontrollieren, ohne wesentlich vom Verkehrsgeschehen abgelenkt zu werden.

Erfindungsgemäß ist der Multifunktionsschalter als ein schwenkbares Betätigungsglied ausgelegt, das der Fahrer mit seinem Daumen, ohne die Hand vom Lenker nehmen zu müssen, antippt und so durch die einzelnen Menüs bzw. Funktionen auf dem Bildschirm blättert. Erscheint die gewünschte Funktion, drückt er das Betätigungsglied und wählt die Funktion aus.

Das Betätigungsglied kann die Tippbewegung nur in einer Richtung erlauben. Zweckmäßiger ist es jedoch, beidseitiges Tippen zuzulassen, um in den Menüs vor- und zurückblättern zu können. Um die Bedienung noch zu vereinfachen, kehrt das Betätigungsglied nach jedem Tippen automatisch in seine Ausgangslage zurück.

In einer anderen Ausgestaltung weist der Multifunktionsschalter eine mit dem Daumen erreichbare Schaltwalze auf, die sich beidseitig um ihre Walzenachsen verdrehen lässt. Das Drehen bewirkt wiederum ein Blättern in den Menüs. Durch Druck auf die Schaltwalze senkrecht zur Walzenachsen lässt sich in diesem Fall die gewünschte Funktion auswählen.

Nach der Auswahl der gewünschten Funktion kann sowohl bei der Ausführung des Multifunktionsschalters mit dem schwenkbaren Betätigungsglied als auch mit der Schaltwalze am Bildschirm eine Anzeige mit Richtungspfeilen erscheinen. Die Richtungspfeile geben in diesem Fall die Verstellrichtungen des zu beeinflussenden Aggregats an, bspw. die Lautstärkeregelung eines Audiogerätes oder Höhenverstellung eines Windschildes. Durch erneutes Tippen des Betätigungsgliedes bzw. durch Drehen der Schaltwalzen lässt sich das jeweilige Aggregat verstellen. Sobald die gewünschte Einstellung erreicht ist, genügt wiederum ein Niederdrücken des Betätigungsgliedes oder der Schaltwalze. oben und unten oder rechts und links anwählen. Nach Erreichen der gewünschten Einstellung ist es bei dieser Ausführung zweckmäßig, dies durch Niederdrücken des zusätzliche Schalterelements zu bestätigen.

Ganz allgemein lässt sich der Multifunktionsschalter ergonomisch und haptisch in vorteilhafter Weise gestalten. Soweit er nachts mit einer Suchbeleuchtung erkennbar sein soll, sind aufgrund der geringen Zahl seine Betätigungsschalter sicher auseinander zu halten. Insgesamt bietet der Multifunktionsschalter einen hohen Bedienungskomfort mit einer - in Verbindung mit dem Bildschirm - verbesserten Funktionsauswahl. Orientierungsschwierigkeiten und damit Fehlbedienungen lassen sich wesentlich reduzieren, was letztendlich zu einer erhöhten Sicherheit im Straßenverkehr beiträgt, da der Fahrer weit weniger vom Verkehrsgeschehen abgelenkt wird.

Bei einer besonders zweckmäßigen Ausgestaltung des Funktionsschalters sind die Funktionen des ersten und zweiten Schalterelements vertauscht. In einer vorteilhaften Ausführung befindet sich dabei das Schalterelement für das Bestätigen der angewählten Funktion innerhalb des Schalterelements für das Auswählen der Funktionen. Auf diese Weise wird eine platzsparende Bauweise erreicht.

Weitere vorteilhafte Ausgestaltungen der Erfindung ergeben sich aus der nachfolgenden Beschreibung anhand der zugehörigen Zeichnung. Es zeigen
- Fig. 1: abschnittsweise den vorderen Abschnitt eines Motorrades mit einem Bildschirm und einem Multifunktionsschalter an einem Motorradlenker,
- Fig. 2a, b, c: den Multifunktionsschalter nach Fig. 1 in vergrößerter Dar- stellung und mit einzelnen Bedienungsmöglichkeiten

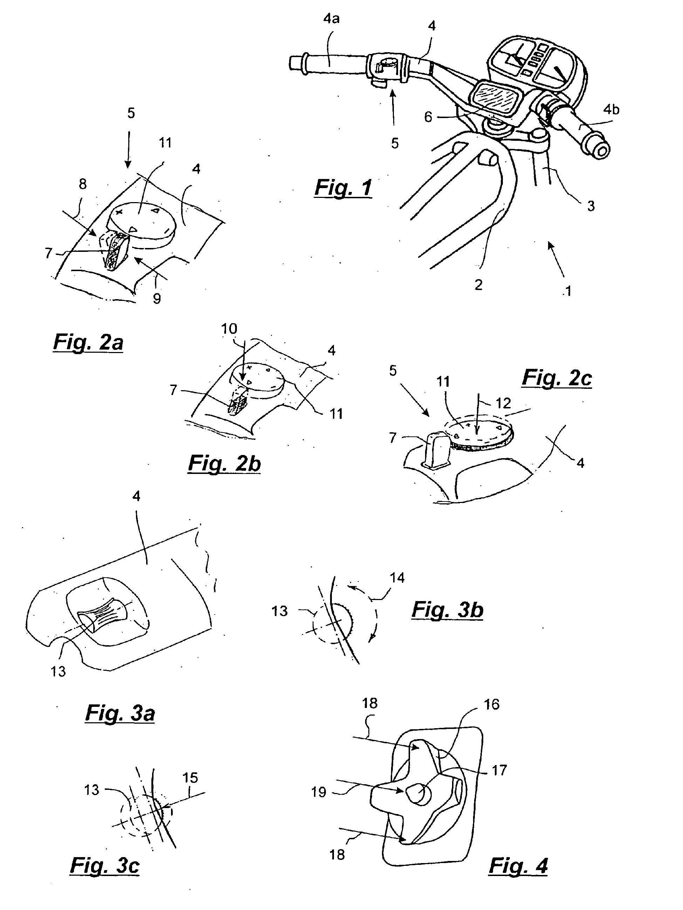

Für die soeben beschriebenen erweiterten Funktionen kann es aber aus Gründen der Übersichtlichkeit und Vermehrung der Verstellmöglichkeiten vorteilhaft sein, dem Multifunktionsschalter ein weiteres, mit dem Daumen erreichbares Schalterelement hinzuzufügen. In diesem Fall wird das Schalterelement erst aktiviert, wenn die gewünschte Funktion ausgewählt ist. Bei entsprechender Ausgestaltung, bspw. durch kreuzförmig zueinander angeordneten Schaltflächen lassen sich dann Verstellbewegung bspw. nach
- Fig. 3a, b, c: eine zweite Ausführungsart des Multifunktionsschalters, wiederum mit seinen Bedienungsmöglichkeiten und
- Fig. 4: einen integrierten Multifunktionsschalter.

Das in **Fig. 1** angedeutete Motorrad 1 weist einen Rahmen 2 auf, an dem drehbar eine Vorderradgabel 3 gelagert ist. Die Vorderradgabel 3 nimmt ein nicht näher dargestelltes Vorderrad auf. Eine Lenkstange 4 mit Griffstücken 4a, 4b an ihren Enden ist gegebenenfalls über weitere Bauteile fest mit der Vorderradgabel 3 verbunden. Ein ebenfalls nicht dargestellter Motorradfahrer umklammert beim Fahren mit seinen Händen die Griffstücke 4a, 4b. Durch Drehen der Lenkstange 4 leitet er Lenkbewegungen über das Vorderrad ein und manövriert auf diese Weise das Motorrad.

Aus Sicherheitsgründen sollte der Fahrer während der Fahrt den Lenker bzw. die Lenkstange 4 nicht loslassen. Um dennoch verschiedene Funktionen, wie z. B. Verstellung eines nicht erkennbaren Windschildes oder die Lautstärkeregelung eines Audiogerätes aufzurufen, sieht das Motorrad eine Anzeigeeinrichtung mit einem Multifunktionsschalter 5 und einem Bildschirm 6 vor. Der Multifunktionsschalter 5 befindet sich unmittelbar neben dem linken Griffstück 4a an der Lenkstange 4, während der Bildschirm 5 in Fahrtrichtung vor dem Motorradfahrer auf dem Lenker oder lenkerfesten Bauteilen angeordnet ist; der Bildschirm sitzt demnach etwa in der Mitte der länglichen Erstreckung der Lenkstange 4. Auf dem Bildschirm können unterschiedliche Funktionen angezeigt werden, wobei das Blättern in den entsprechenden Menüs durch die Betätigung des Multifunktionsschalter erfolgt.

Die Bedienung des Multifunktionsschalters zeigen die **Fig. 2a bis 2c****.** Ein senkrecht abstehendes Betätigungsglied 7 kann der Motorradfahrer mit seinem Daumen beidseitig antippen, symbolisiert durch Pfeile 8 und 9. Das Betätigungsglied 7 schwenkt in einer Ebene je nach Betätigungsrichtung nach links oder rechts und kehrt nach jeder Betätigung wieder in seine Ausgangsstellung zurück. Wie erwähnt, bewirkt die Betätigung ein Blättern in dem Bildschirmmenü. Je nach Tipprichtung (Pfeile 8 und 9) erfolgt das Blättern vorwärts oder rückwärts.

Hat der Fahrer die gewünschte Funktion gefunden, bestätigt er sie, indem er das Betätigungsglied 5 senkrecht zu der bisherigen Betätigungsebene in Pfeilrichtung 10 (**Fig. 2b**) nach unten drückt. Nunmehr ist ein zum Multifunktionsschalter gehörendes weiteres Schaltelement 11 aktiviert. Dieses Schaltelement 11 ist als Kreisscheibe ausgelegt und kann in vier kreuzförmig zueinander angeordneten Richtungen gedrückt werden. Abhängig von dem zu verstellende Aggregat kann das Schaltelement 11 in allen vier Schaltmöglichkeiten oder auch in nur zwei gegenüberliegende Richtungen betätigt werden. Sobald die gewünschte Einstellung erreicht ist, drückt der Fahrer das Schaltelement 11 in Pfeilrichtung 12 (**Fig. 2c**) nach unten. Die Anzeige auf dem Bildschirm 6 (**Fig. 1**) kann dann wieder auf das Ausgangsmenü zurückspringen.

Bei der Ausführung nach den **Fig. 3a bis 3b** besteht der Multifunktionsschalter lediglich aus einer Schaltwalze 13, die sich entsprechend einem Doppelpfeil 14 (**Fig. 3b**) beidseitig um die Walzenachse drehen lässt. Das Drehen bewirkt wiederum ein Blättern im Ausgangsmenü auf dem Bildschirm 6 (**Fig. 1**). Sobald die gewünschte Funktion erscheint, lässt sie sich durch eine Druck senkrecht zur Walzenachse in Pfeilrichtung 15 (**Fig. 3c**) bestätigen. Die Verstellung des Aggregats erfolgt bei dieser Ausführung nicht über ein getrenntes Schalterelement, sondern durch erneutes Drehen der Schaltwalze 13 in Pfeilrichtung 14. Ein weiterer Druck auf die Schaltwalze in Pfeilrichtung 15 führt ins Ausgangsmenü zurück.

Fig. 4 zeigt einen integrierten Multifunktionsschalter mit einem ersten Schalterelement 16, das vier sich kreuzförmig gegenüberliegende äußere Betätigungspunkte aufweist und in dessen Mitte ein weiteres Schalterelement 17 in Form eines vorstehenden, niederdrückbaren Stifts sitzt. Die Betätigung des Schalterelements 16 erfolgt ähnlich dem Schaltelement 11 nach den Fig. 2a - 2c. So kann beispielsweise durch abwechselndes Antippen zweier sich gegenüberliegender Betätigungspunkte in einem Menü vor- und zurückgeblättert werden. In der Fig. 4 sind dies der obere und untere Betätigungspunkt, die Betätigungen selbst sind durch die Pfeile 18 symbolisiert. Sobald der Fahrer seine gewünschte Funktion gefunden hat, bestätigt er sie durch Niederdrücken des Schalterelements 16 entsprechend eines Pfeils 19. Dadurch können nun die beiden anderen sich gegenüberliegenden Betätigungspunkte aktiviert sein, also nach Fig. 4 der vordere und der hintere Betätigungspunkt. Mit ihnen lässt sich dann das möglicherweise angewählte Aggregat verstellen. Ein erneutes Antippen des Schalterelementes 17 kann dann wieder in das Ausgangsmenü zurückführen. Welche Funktionen mit den Schalterelementen 16 und 17 an- und ausgewählt werden sollen, bleibt dem jeweiligen Anwendungsfall überlassen. Vorteilhaft ist es jedoch, die Schalterelementen so auszulegen, dass sie nach jedem Betätigen in ihre Ausgangslage zurückkehren. Darüber hinaus erlaubt dieser Multifunktionsschalter es dem Fahrer, ohne den Daumen merklich anzuheben, die einzelnen Schaltbetätigungen auszuführen.

## Patentansprüche

1. Anzeigeeinrichtung mit einem Bildschirm und einem die Bildschirm-anzeige steuernden Multifunktionsschalter, der durch unterschiedliche Bedienungsrichtungen das Anzeigen und Auswählen von Menüs auf dem Bildschirm ermöglicht, wobei die Anzeigeeinrichtung einer Lenkstange (4) eines Motorrads (1) zugeordnet ist, und der Bildschirm (6) sich vor dem Fahrer in dessen Sichtbereich in etwa in der Mitte der länglichen Erstreckung der Lenkstange (4) befindet, **dadurch gekennzeichnet, dass** der Multifunktionsschalter (5) in unmittelbare Nähe eines am Ende der Lenkstange (4) vorgesehenen Lenkergriffs (4a) befestigt ist, der Multifunktionsschalter (5) ein schwenkbares Betätigungsglied (7) aufweist, das durch Antippen in einer Ebene auslenkbar ist und durch Antippen das Aufrufen von Menüs am Bildschirm (6) bewirkt und dass durch Drücken des Betätigungsglieds (7) in senkrechter Richtung zur Betätigungsebene der gewünschte Menüpunkt ausgewählt wird.

2. Anzeigeeinrichtung nach Anspruch 1, **dadurch gekennzeichnet, dass** sich das Betätigungsglied (7) beidseitig auslenken lässt und nach jeder Betätigung in seine Ausgangslage zurückkehrt.

3. Anzeigeeinrichtung nach Anspruch 2, **dadurch gekennzeichnet, dass** der Multifunktionsschalter (5) ein zweites von Hand betätigbares Schalterelement (11) aufweist, das beim Betätigen abhängig vom gewählten Menüpunkt Schaltsignale abgibt.

4. Anzeigeeinrichtung nach Anspruch 3, **dadurch gekennzeichnet, dass** das zweite Schalterelement (11) zur Auslösung von Schaltsignalen wippenartig in vier kreuzförmig zueinander angeordneten Richtungen betätigbar ist.

5. Anzeigeeinrichtung nach Anspruch 4, **dadurch gekennzeichnet, dass** sich das Schalterelement (11) zur Auslösung eines weiteren Schaltsignals insgesamt niederdrücken lässt.

6. Anzeigeeinrichtung nach Anspruch 5, **dadurch gekennzeichnet, dass** das Schalterelement (11) nach jedem Betätigen wieder in seine Ausgangslage zurückkehrt.

## Claims

1. A display device comprising a screen controlled by a multifunctional switch which, via various control directives, displays and selects menus on the screen, wherein the display device is associated with a handlebar (4) of a motorcycle (1) and the screen (6) is disposed within sight and in front of the driver approximately in the longitudinal middle of the handlebar (4), **characterised in that** the multifunctional switch (5) is fastened in the immediate neighbourhood of a handle (4a) at the end of the handlebar (4), the multifunctional switch (5) has a pivotable actuating member (7) which can be tipped in a plane so as to call up menus on the screen (6), and a required menu item is selected by pressing the actuating member (7) in a direction at right angles to the actuating plane.

2. A display device according to claim 1, **characterised in that** the actuating member (7) can be moved to either side and returns to its starting position after each actuation.

3. A display device according to claim 2, **characterised in that** the multifunctional switch (5) has a second element (11) which is manually operated and delivers switching signals when actuated, depending on the selected menu item.

4. A display device according to claim 3, **characterised in that** the second switch element (11) can be actuated like a rocker button in four crosswise directions in order to trigger switching signals.

5. A display device according to claim 4, **characterised in that** the entire switch element (11) can be pressed in order to trigger an additional switching signal.

6. A display device according to claim 5, **characterised in that** the switch element (11) returns to its starting position after each actuation.

## Revendications

1. Installation d'affichage comportant un écran et un commutateur multifonction commandant l'affichage sur l'écran, et permettant l'affichage et la sélection de menus sur l'écran par différentes directions d'actionnement,
* l'installation d'affichage étant associée à un guidon (4) de motocycle (1), et
* l'écran (6) se trouve devant le conducteur, dans son champ de vision, sensiblement au milieu de l'extension longitudinale du guidon (4), installation d'affichage **caractérisée en ce que**
. le commutateur multifonction (5) est prévu au voisinage immédiat d'une poignée (4a) à l'extrémité du guidon (4),
. le commutateur multifonction (5) comporte un organe d'actionnement pivotant (7) qui peut être dévié dans un plan lorsqu'il est touché, et lorsqu'il est touché, il appelle des menus sur l'écran (6), et
. en poussant l'organe d'actionnement (7) dans la direction perpendiculaire au plan d'actionnement on sélectionne le point choisi du menu.

2. Installation d'affichage selon la revendication 1,
**caractérisée en ce que**
l'organe d'actionnement (7) peut être dévié des deux côtés et revient dans sa position initiale après chaque actionnement.

3. Installation d'affichage selon la revendication 2,
**caractérisée en ce que**
le commutateur multifonction (5) comporte un second élément de commutation (11) qui peut être actionné par la main et dont l'actionneur produit des signaux de commutation, en fonction du point de menu choisi.

4. Installation d'affichage selon la revendication 3,
**caractérisée en ce que**
le second élément de commutation (11) est actionné à la manière d'une bascule dans quatre directions suivant une répartition cruciforme pour déclencher les signaux de commutation.

5. Installation d'affichage selon la revendication 4,
**caractérisée en ce que**
l'élément de commutation (11) peut être enfoncé globalement pour déclencher un autre signal de commutation.

6. Installation d'affichage selon la revendication 5,
**caractérisée en ce qu'**
après chaque actionnement l'élément commutation (11) revient dans sa position initiale.
